Europäisches Patentamt

(19) European Patent Office

Office européen des brevets

(11) Numéro de publication: **0 307 337**
**A1**

(12) **DEMANDE DE BREVET EUROPEEN**

(21) Numéro de dépôt: **88460018.0**

(22) Date de dépôt: **30.08.88**

(51) Int. Cl.⁴: **G 21 C 19/32**

(30) Priorité: **03.09.87 FR 8712342**

(43) Date de publication de la demande:
**15.03.89 Bulletin 89/11**

(84) Etats contractants désignés:
**BE CH DE ES GB IT LI NL**

(71) Demandeur: **SEBEMEX SA**
**93, Avenue de la République**
**F-37100 Tours (FR)**

**Vibert, Pierre André Georges**
**Les Grands Terriers**
**F-36330 Velles (FR)**

(72) Inventeur: **Mexia, Bernard**
**Moulin de la Ville-Follette**
**F-37230 Luynes (FR)**

**Vibert, Pierre André Georges**
**Les Grands Terriers**
**F-36330 Velles (FR)**

(74) Mandataire: **Le Guen, Louis François**
**CABINET Louis LE GUEN 38, rue Levavasseur B.P. 91**
**F-35802 Dinard Cédex (FR)**

(54) **Housse de protection pour chargement de combustibles irradiés.**

㊗ La housse de protection, en matière plastique, est destinée à revêtir un château pendant son immersion dans de l'eau contaminée d'une piscine de stockage d'éléments combustibles nucléaires irradiés.

De l'eau déminéralisée est introduite entre la housse et le château pendant le séjour du château dans la piscine. Le fond de la housse est relativement rigide et posséde des amorces de déchirure (18, 19) qui se déchirent quand le château revêtu de sa housse sort de l'eau, l'eau déminéralisée de la housse s'écoulant alors dans la piscine. Le fond (6) est, de préférence, constitué par une couronne (9) de même nature que sa paroi latérale, et par un disque (15) dont le bord circulaire (22) est soudé à celui de la couronne (9). Sous la partie centrale des amorces de déchirure (18, 19), est prévue une rondelle d'étanchéité (16) adhérant à ladite partie centrale.

FIG. 2

EP 0 307 337 A1

**Description**

La présente invention concerne une housse de protection pour châteaux de chargement sous l'eau de combustibles irradiés.

Les combustibles irradiés sortant du coeur d'un réacteur nucléaire sont stockés un certain temps dans une piscine de stockage. Les châteaux destinés à transporter le combustible de cette piscine de stockage vers une usine de retraitement sont soit chargés sous l'eau dans une zone déterminée de la piscine de stockage ou dans une piscine distincte réservée au chargement des châteaux, soit chargés à sec. Dans la suite, on ne considérera que le chargement des châteaux sous l'eau.

Le chargement d'un château sous l'eau entraîne une contamination de la surface externe du château qui remonte mouillé par de l'eau contaminée. Donc, avant de transporter un château ainsi chargé hors du site de la piscine, il faut, entre autres, en décontaminer la surface externe.

Cette décontamination peut être effectuée au jet, mais elle est longue et nécessite une grande quantité d'eau qui se contamine au contact du château et qu'il faut dont recycler. C'est pourquoi on a utilisé de la peinture pelable qui est appliquée sur la surface externe du château et, après l'avoir chargé et remonté, la peinture est pelée. Ce procédé souffre de plusieurs inconvénients. Premièrement, la couche de protection matérialisée par la peinture est quelquefois insuffisante et, une fois la peinture pelée, il faut poursuivre la décontamination de la surface externe du château par jet d'eau. Deuxièmement, les surfaces des châteaux ne sont pas toujours lisses et la peinture est difficile à peler en certains endroits peu accessibles.

Comme l'indique le "Technical Report series No. 189" édité par l'International Atomic Energy Agency, Vienne, Autriche et intitulé "Storage, Handling and Movement of Fuel and related Components at Nuclear Power Plants", page 33, §6.2.3.2., quand on manipule des châteaux dans des piscines, ... on a, dans certains cas, trouvé plus commode de revêtir le château de plastique ou d'acier avant de le placer dans la piscine au lieu de le décontaminer ensuite.

En ce qui concerne les revêtements en plastique, on a cherché à utiliser des housses en plastique rétractable qui se plaquent intimement contre la surface externe du château. Apparemment, ce procédé est resté jusqu'ici sans succès. Si l'on utilise une housse relativement ample autour de la surface externe du château, il est préférable que, pendant l'immersion, l'espace compris entre la housse et la surface externe du château soit rempli d'eau, puis qu'avant la fin de la sortie complète du château hors de l'eau de la piscine, l'eau de remplissage s'écoule dans la piscine. On notera que l'eau de remplissage sert notamment à amortir les chocs que pourrait subir le château au cours des manipulations dans la piscine. Bien entendu, l'eau de remplissage est une eau qui a été traitée, notamment déminéralisée, pour pouvoir être ajoutée à l'eau de la piscine en respectant les normes de sécurité. Le vidage de l'eau de remplissage nécessite l'utilisation d'une vanne ou d'une soupape dans le fond de la housse sous le fond du château. Pour des raisons faciles à comprendre, le fond du château reposant au fond de la piscine doit être strictement horizontal car les éléments combustibles doivent descendre verticalement dans l'enceinte du château. Cela implique que le fond de la housse doit être une surface rigoureusement plane.

Un objet de l'invention consiste à prévoir une telle housse à fond plat pourvu d'une soupape.

Suivant une caractéristique, il est prévu une housse en matière plastique destinée à revêtir un château pendant son immersion dans de l'eau contaminée d'une piscine de stockage d'éléments combustibles nucléaires irradiés, de l'eau déminéralisée étant introduite entre la housse et le château pendant le séjour du château dans la piscine, le fond de la housse étant relativement rigide et possédant des amorces de déchirure qui se déchirent quand le château revêtu de sa housse sort de l'eau déminéralisée de la housse s'écoulant dans la piscine.

Suivant une autre caractéristique, le fond de la housse est constitué par une couronne de même nature que sa paroi latérale et ne formant qu'une seule pièce avec elle, et par un disque dont le bord circulaire est soudé à celui de la couronne.

Suivant une autre caractéristique, lesdites amorces de déchirure sont formées de lignes de moindre épaisseur partant du centre dudit fond.

Suivant une autre caractéristique, sous la partie centrale des amorces de déchirure, est prévue une rondelle d'étanchéité adhérant à ladite partie centrale.

Suivant une autre caractéristique, ladite partie centrale du fond et ladite rondelle sont en une matière plastique de surface très lisse, de manière que la rondelle adhère naturellement à ladite partie centrale quand celle-ci est pratiquement plane.

Suivant une autre caractéristique, les amorces de déchirure comportent au-dessus de la partie centrale de la rondelle des prédécoupes.

Suivant une autre caractéristique, sur une petite longueur, entre deux amorces de déchirure, le bord de la rondelle est soudé au fond.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

la Fig. 1 est une vue générale en élévation d'une housse de protection de château, munie d'une soupape suivant l'invention,

la Fig. 2 est une vue en plan de la soupape de la Fig. 1 soudée au fond de la housse,

la Fig. 3 est une vue en coupe de la partie basse d'une housse de protection de la Fig. 1 en position de complète immersion,

la Fig. 4 est une vue schématique de la partie basse, montrée à la Fig. 3, quand le château émerge de la piscine, et

la Fig. 5 est une vue schématique de la partie basse, montrée à la Fig. 3, en position ouverte à la fin de la sortie du château.

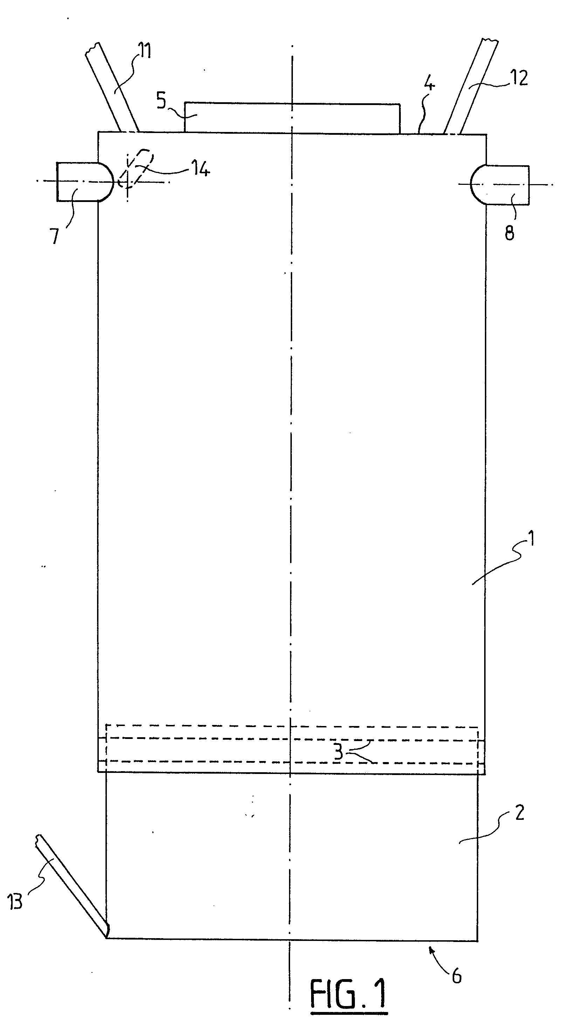

La housse, montrée à la Fig. 1, se compose d'une partie haute 1 et d'une partie basse 2, qui sont toutes deux cylindriques avec un diamètre externe d'environ 2,75 m, par exemple. Les parties 1 et 2 sont, par exemple, en toile revêtue de polyester et sont réunies par deux fermetures à glissières 3, le bord supérieur de la partie basse 2 étant à l'intérieur du bord inférieur de la partie haute 1.

Le bord supérieur de la paroi cylindrique de la partie haute 1 est prolongé, vers l'intérieur, par une couronne annulaire horizontale 4, dont le bord interne est prolongé vers le haut par une collerette 5. La couronne 4 est destinée à reposer sur l'épaulement supérieur d'un château, non montré, tandis que la collerette 5 est destinée à être frettée, d'une manière étanche, autour du col, non montré, du château. Autour des tourillons de manutention 7 et 8 de celui-ci, la housse présente des ouvertures dont les bords sont serrés, d'une manière étanche.

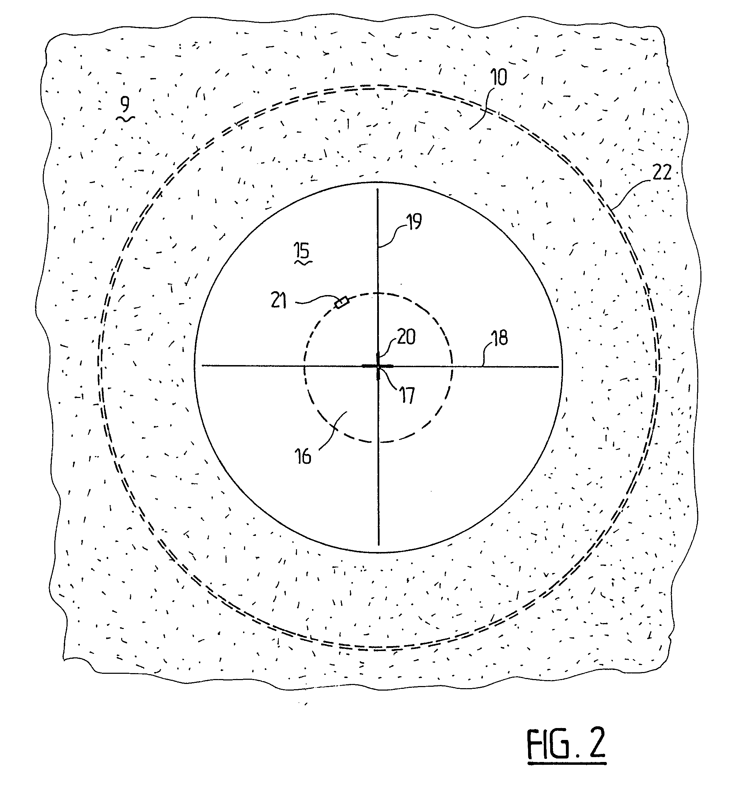

Le fond 6 de la partie basse 2, qui est montré entièrement plat à la Fig. 1, se compose, comme le montre la Fig. 2, d'une couronne annulaire 9 prolongeant le bord inférieur de la paroi latérale de la partie 2 et d'une soupape circulaire centrale 10 dont le bord externe 22 est soudé à la face inférieure de la couronne 9. Le diamètre interne de la couronne 9 est, par exemple, inférieur de 6 à 7 cm au diamètre externe de la soupape 10, laquelle à un diamètre d'environ 34 cm. La soupape 10 est en matière plastique, telle que du PVC, par exemple. Elle sera décrite plus en détail dans la suite.

Dans la partie supérieure, sous la couronne 4, la partie 1 est reliée à des manches 11 et 12 tandis que la partie basse 2 est, dans sa partie inférieure, reliée à une manche 13. Les manches 11 à 13 sont assez longues, par exemple de 12 à 18 m, pour que leurs extrémités libres puissent être maintenues au-dessus du niveau de la piscine quand le château repose sur le fond de cette dernière. Des moyens, tels que des passants sont prévus, sur la couronne 4, pour la manipulation de la housse. La manche 13 sert à remplir la housse d'eau déminéralisée tandis que, selon la disposition de la piscine, l'une des manches 11 et 12 sert à absorber d'éventuels trop-pleins. Une manche 14, également montrée, sert à mettre en communication l'intérieur du château et l'une des manches 11 ou 12 pour éliminer de l'air en surpression.

La soupape 10, Fig. 2, se compose d'un disque 15 et d'une rondelle d'étanchéité 16 qui, comme on l'a déjà mentionné, sont en film de PVC et, plus particulièrement en PVC de qualité "cristal", c'est-à-dire en PVC à surface très lisse. Dans le disque 15 de centre 17, ont été creusées des amorces de déchirure rectilignes 18 et 19 qui sont diamétrales, perpendiculaires entre elles et ont, par exemple, une longueur de 20 cm. Immédiatement autour du centre 17, les amorces de déchirure 18 et 19 comportent des prédécoupes de déchirure radiales 20, représentées par un épaississement du trait à la Fig. 2.

La rondelle d'étanchéité 16 est circulaire, de même centre 17 que le disque 15 et a un rayon de l'ordre de 4 cm. Placée sous le centre 17 du disque 15, elle recouvre complètement les prédécoupes de déchirure 20, mais laisse les parties extrêmes des amorces 18 et 19 libres. La rondelle 16 est reliée à la face inférieure du disque 15, le long d'un petit arc de cercle 21 situé entre deux amorces de déchirure. La liaison entre la rondelle et le disque est obtenue par emboutissage à chaud.

Il faut noter que l'épaisseur des films de PVC servant à former le disque 15 et la rondelle 16 est de moins de 1 mm, si bien que le fond 6 est pratiquement rigoureusement plan.

En pratique, la rondelle 16 adhère naturellement au disque 15 grâce à la qualité de surface du PVC cristal qui procure un effet réciproque de ventouse. L'adhérence entre la rondelle 16 et le disque 15 est particulièrement forte quand ils sont plans.

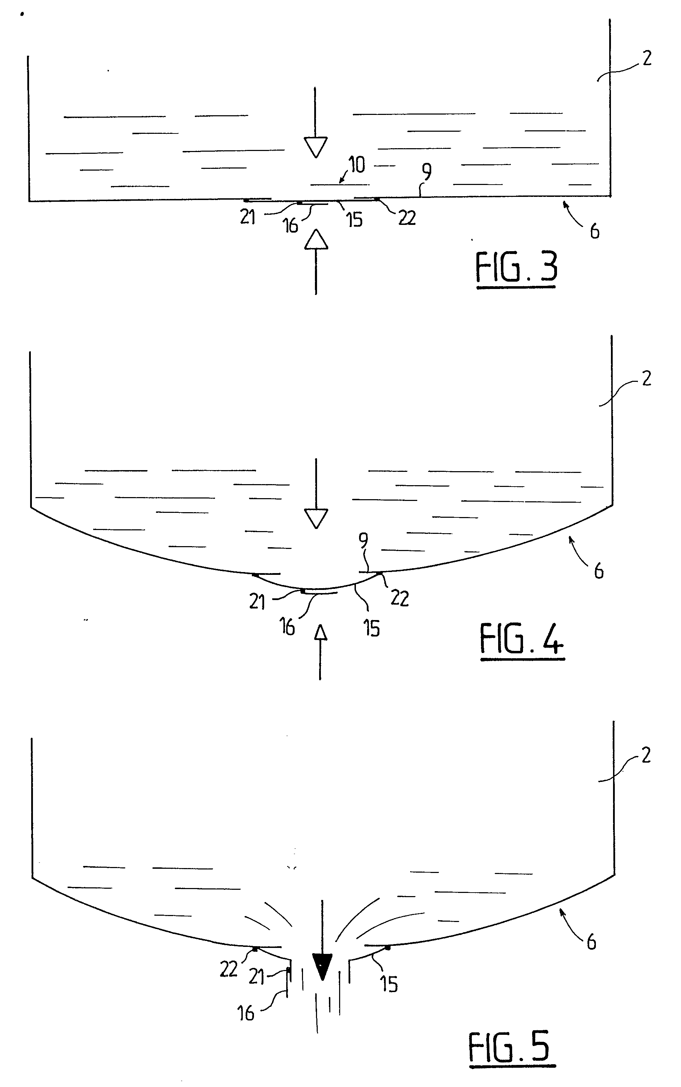

Comme le montre la Fig. 3, tant que la housse contenant le château et de l'eau autour de ce dernier, est totalement immergée dans la piscine, son fond 6 reste plan car les pressions à l'intérieur et à l'extérieur de la housse sont égales. On a symboliquement représenté ces pressions par deux flèches opposées dont les têtes et les longueurs sont égales.

A la Fig. 4, on suppose qu'une partie de la housse, contenant toujours le château, a immergé au-dessus de la surface libre de la piscine. La pression à l'intérieur de la housse devient plus forte qu'à l'extérieur. Le fond 6 devient bombé et les surfaces respectives du disque 15 et de la rondelle 16 peuvent commencer à glisser l'une par rapport l'autre. On a représenté la pression dirigée vers le bas par une flèche plus grande que la flèche symbolisant la pression dirigée vers le haut.

A la Fig. 5, on suppose que la housse est presque complètement sortie de la piscine. La rondelle 16 s'est détachée du disque 15 car les prédécoupes 20 se sont ouvertes sous l'effet du bombage et qu'ainsi la rondelle 16 s'est trouvée directement soumise à la pression de l'eau interne alors que celle de l'eau externe est moins forte. La rondelle 16 glissant sur le disque 15, les secteurs de ce dernier définis par les amorces de déchirure 18 et 19 peuvent se séparer le long de ces lignes. L'eau déminéralisée s'écoule donc dans la piscine. A la Fig. 5, on a montré lesdits secteurs et la rondelle 16 pendant verticalement sous le fond. La rondelle 16 reste toujours accrochée au disque 15 par l'arc soudé 21.

Bien entendu, les dimensions du disque, des amorces de déchirure et de la rondelle ne sont données qu'à titre indicatif et peuvent être modifiées selon les dimensions du château auquel la housse suivant l'invention est destinée.

**Revendications**

1) Housse de protection en matière plastique pour château de chargement sous l'eau de combustibles irradiés destinée à revêtir le château pendant son immersion dans de l'eau contaminée d'une piscine de stockage d'éléments combustibles nucléaires irradiés, caractérisée en ce que de l'eau déminéralisée est introduite entre la housse (1-2) et le château pendant le séjour du château dans la piscine, le fond (6) de la housse étant relativement rigide et possédant des amorces de déchirure (18, 19) qui se déchirent quand le château revêtu de sa housse sort de l'eau, l'eau déminéralisée de la housse s'écoulant dans la piscine.

2) Housse suivant la revendication 1, caractérisée en ce que son fond (6) est constitué par une couronne (9) de même nature que sa paroi latérale et ne formant qu'une seule pièce avec elle, et par un disque (15) dont le bord circulaire (22) est soudé à celui de la couronne (9).

3) Housse suivant la revendication 2, caractérisée en ce que lesdites amorces de déchirure (18, 19) sont formées de lignes de moindre épaisseur partant du centre (17) dudit fond (6).

4) Housse suivant l'une des revendications 1 à 3, caractérisée en ce que sous la partie centrale des amorces de déchirure (18, 19), est prévue une rondelle d'étanchéité (16) adhérant à ladite partie centrale.

5) Housse suivant la revendication 4, caractérisée en ce que ladite partie centrale (15) du fond et ladite rondelle (16) sont en une matière plastique de surface très lisse, de manière que la rondelle (16) adhère naturellement à ladite partie centrale (15).

6) Housse suivant la revendication 4 ou 5, caractérisée en ce que les amorces de déchirure (18, 19) comportent au-dessus de la partie centrale de la rondelle (16) des prédécoupes (20).

7) Housse suivant l'une des revendications 4 à 6, caractérisée en ce que sur un petit arc de cercle (21), entre deux amorces de déchirure (18, 19), le bord de la rondelle (16) est soudé au fond.

<u>FIG.1</u>

FIG. 2

FIG. 3

FIG. 4

FIG. 5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 317 737 (ATLANTIC RICHFIELD) <br> * Page 6, ligne 14 - page 7, ligne 18; page 10, lignes 19-33; figures 1-6,8 * <br> --- | 1 | G 21 C 19/32 |
| A | US-A-4 353 391 (BELMONTE et al.) <br> * Colonne 3, ligne 9 - colonne 4, ligne 6; figure unique * <br> --- | 1 | |
| A | GB-A-2 020 626 (HITACHI SHIPBULDING) <br> * Page 2, lignes 86-116; figures 1,2 * <br> --- | 1 | |
| A | US-A-3 463 351 (S.M. MILLS) <br> * Colonne 3, ligne 46 - colonne 4, ligne 11; figures 1,2 * <br> ----- | 1,3,4,6 | |

DOMAINES TECHNIQUES
RECHERCHES (Int. Cl.4)

G 21 C   19/00
G 21 F    5/00
F 16 K   17/00

Le présent rapport a été établi pour toutes les revendications

| Lieu de la recherche | Date d'achèvement de la recherche | Examinateur |
|---|---|---|
| LA HAYE | 21-11-1988 | JANDL F. |

EPO FORM 1503 03.82 (P0402)